Europäisches Patentamt

European Patent Office

Office européen des brevets

(19)

(11) Veröffentlichungsnummer: **0 203 886**
**B1**

## (12) EUROPÄISCHE PATENTSCHRIFT

(45) Veröffentlichungstag der Patentschrift:
05.07.89

(21) Anmeldenummer: 86810200.5

(22) Anmeldetag: 02.05.86

(51) Int. Cl.⁴: **B 61 D 5/00,** B 61 D 17/04,
B 61 D 17/12, B 61 D 17/16,
B 61 D 39/00

(54) Gedeckter Güterwagen, insbesondere Silowagen.

(30) Priorität: 15.05.85 CH 2086/85

(43) Veröffentlichungstag der Anmeldung:
03.12.86 Patentblatt 86/49

(45) Bekanntmachung des Hinweises auf die Patenterteilung:
05.07.89 Patentblatt 89/27

(84) Benannte Vertragsstaaten:
AT BE CH DE FR GB IT LI SE

(56) Entgegenhaltungen:
DE-B- 2 450 747
FR-A- 2 246 431

(73) Patentinhaber: SCHWEIZERISCHE ALUMINIUM AG,
CH-3965 Chippis (CH)

(72) Erfinder: Ritzi, Antal, Albisriederstrasse 363,
CH-8047 Zürich (CH)
Erfinder: Zehnder, Jürg, Husacherstrasse 2,
CH-8142 Uitikon (CH)

ACTORUM AG

**Beschreibung**

Die vorliegende Erfindung bezieht sich auf einen gedeckten Güterwagen, insbesondere einen Silowagen für Schüttgüter.

Bei gedeckten Güterwagen ist das Dach üblicherweise auf allen vier Seiten an den Wagenwänden, d.h. an den Längs- und an den Stirnwänden, befestigt. Dies trifft auch bei Silowagen zu.

Wegen dieser geschlossenen Bauart weist der Kasten solcher Güterwagen eine grosse Steifigkeit auf, und zwar eine umso grössere Steifigkeit, als der Wagen für schwerere Lasten bestimmt ist und dementsprechend das Kastengerippe stärker ist. Diese hohe Steifigkeit bringt verschiedene Nachteile mit sich:

Zunächst kann sich der starre Wagenkasten beim Fahren an Unebenheiten der Schienenführung, welche vorwiegend bei Weichen sowie bei minderwertigen Werksgeleisen vorkommen können, ungenügend anpassen. Deshalb müssen alle Beanpruchungen, die sonst zu einer Torsion des Kastens um seine Längsachse führen würden, durch die Federung des Fahrgestells aufgefangen und ausgeglichen werden, was einen langen bis übermässig langen Federweg bedingt. Hierzu kommt, dass für schwere Lasten bestimmte Güterwagen mit entsprechend starken Federn ausgerüstet sein müssen, welche naturgemäss eine geringe Flexibilität besitzen. Eine solche Federung ist aber für eine Rückfahrt der geleerten Wagen zum Abfüllort wenig anpassungsfähig. Aus diesen verschiedenen Gründen bedeutet der starre Kastenbau eine erhöhte Entgleisungsgefahr.

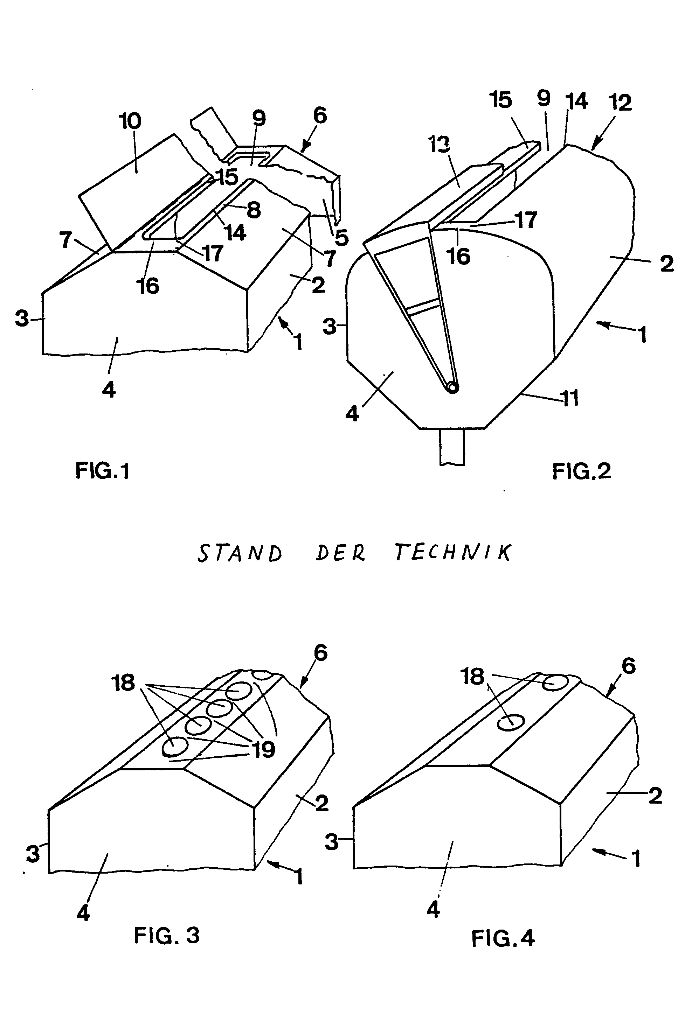

Im weiteren sind oftmals konventionelle Güterwagen, insbesondere Silowagen oder dgl., in ihrem Dach mit Ladeöffnungen versehen, welche meistens von einem Rahmen umgeben sind. Bei solchen Güterwagen führen die erwähnten Ladeöffnungen zu einer Schwächung der Dachkonstruktion, umso mehr als sie sich über einen grösseren Teil der Dachlänge erstrecken, so dass der Wagenkasten sich nicht mehr als starrer Kasten verhält. Die beim Fahren auftretenden Torsionsbeanspruchungen führen dann zu einer mehr oder weniger grossen gegenseitigen Längsverschiebung der beiden seitlichen Längsbereiche des Dachs zueinander, wodurch in der Umgebung der Ladeöffnungen Spannungskonzentrationen bzw. -spitzen entstehen, die in diesen Bereichen zu Ermüdungsrissen führen können. Diese Umstände sollen nachstehend zu besserem Verständnis anhand der Fig. 1-4 näher erläutert werden, welche verschiedene konventionelle Wagentypen schematisch in perspektivischer Ansicht darstellen.

Fig. 1 zeigt einen Gütewagen 1 mit Längswänden 2, 3 und Stirnwänden 4, 5, dessen Dach 6 aus drei Flachteilen, nämlich zwei seitlichen geneigten Teilen 7 und einem mittleren horizontalen Teil 8, besteht, wobei letzterer Teil 8 mit einer länglichen, im wesentlichen rechteckigen Ladeöffnung 9 versehen ist, welche mit einem Klappdeckel 10 verschliessbar ist.

Fig. 2 zeigt einen als Silowagen mit trichterförmigem Boden 11 gestalteten Güterwagen 1 mit gewölbtem Dach 12, dessen längliche, im wesentlichen rechteckige Ladeöffnung 9 mit einem Schwenkdeckel 13 verschliessbar ist. Solche Schwenkdeckel sind auch bei Wagen mit Dächern eckigen Querschnitts nach Fig. 1 anzutreffen. Wenn bei Wagenkasten nach Fig. 1 und 2 beim Fahren Torsionsbeanspruchungen auftreten, so neigen die beiden Längsseiten 14 und 15 der Ladeöffnung 9 dazu, sich relativ zueinander in Längsrichtung zu verschieben, derart, dass die rechteckige Ladeöffnung 9 sich zu einem verwundenen Parallelogramm verformt. Diese Verformung verursacht hohe Spannungskonzentrationen in den Schmalseiten 16 der Öffnung 9, mit Spannungsspitzen in deren ggf. abgerundeten Ecken 17, was zu Ermüdungsrissen 3 in den genannten Bereichen 16, 17 führen kann.

In Fig. 3 ist ein Güterwagen 1 gezeigt, dessen Dach 6 mit vielen eng aneinander liegenden runden Ladeöffnungen 18 versehen ist. Hier konzentrieren sich die beim Fahren auftretenden Torsionsbeanspruchungen, welche unter Bildung von längsgerichteten Scherkräften in den zwischen den Öffnungen 18 bzw. zwischen den ersten und letzten Öffnungen 18 und den Kastenstirnwänden 4, 5 verbleibenden Bereichen 19 der Dachhaut Spannungen erzeugen, was in diesen Bereichen zu Ermüdungsrissen führen kann.

In Fig. 4 ist ein Güterwagen 1 gezeigt, dessen Dach 6 mit wenigen, weit auseinander und in relativ grosser Entfernung von der Stirnwänden 4, 5 angeordneten runden Ladeöffnungen 18 versehen ist. In einem solchen Fall bedeuten die Ladeöffnungen 18 praktisch keine Schwächung des Daches 6. Der Wagenkasten verhält sich daher beim Fahren, wie wenn keine Ladeöffnungen vorhanden wären, d.h. als Kasten mit hoher Steifigkeit. Der leere Güterwagen zeigt dann den eingangs beschriebenen Nachteil der Entgleisungsgefahr, wogegen die Rissbildungsgefahr vernachlässigbar ist.

Es versteht sich von selbst, dass zwischen den in Fig. 3 bzw. 4 gezeigten Fällen Übergangssituationen bestehen.

Der vorliegenden Erfindung lag die Aufgabe zugrunde, für gedeckte Güterwagen, insbesondere Silowagen, eine Dachkonstruktion zu schaffen, welche beim Fahren das Auftreten von Verbindungen im Kasten ermöglicht und hierdurch bei Schienenunebenheiten sowohl die Entgleisungsgefahr wie auch die Rissbildungsgefahr am Dach beseitigt werden können.

Die Aufgabe wird erfindungsgemäss dadurch gelöst, dass der durch zusammenhängende Längswände, Stirnwände und Boden gebildete Wagenkasten als selbsttragender verwindungsweicher Körper gestaltet, und das Dach mindestens einen mit einer Längswand fest verbundenen Längsteil aufweist, welche gegenüber den Stirnwänden und der andern Längswand eine die Torsionen auffangende Bewegungsfreiheit in der Wagenlängsrichtung besitzt.

Dabei kann das Dach aus einem einzigen Teil bestehen und sich mit seinem freien Längsrand auf der oberen Kante der zweiten Längswand des Wagenkasten verschiebbar abstützen.

Vorzugsweise weist das Dach zwei zueinander längsverschiebbare Längsteile auf, die mit dem einen ihrer Längsränder an der einen bzw. der anderen Kastenlängswand fest verbunden sind und sich im Abstand von diesen Verbindungsstellen mittelbar oder unmittelbar auf Bestandteile des Kastens, z.B. auf die Kastenstirnwände, verschiebbar abstützen.

Weiter ist es möglich, das Dach aus einer grösseren Anzahl von zueinander längsverschiebbaren Längsteilen zu bilden.

Wenn das Dach Ladeöffnungen aufweist, so können diese in einem in sich geschlossenen Dachteil angebracht oder zwischen zwei entsprechend geformten, zueinander verschiebbaren Dachteilen gebildet werden. Eine Weiterausbildung der Erfindung ist auch der Anschluss der Dachteile mit den Stirnwänden.

Die Erfindung wird anhand von in der Zeichnung dargestellten Ausführungsbeispielen näher erläutert.

Es zeigen schematisch:

Fig. 5 eine Perspektivansicht eines Güterwagens mit durch seinen einen Längsrand befestigtem einteiligen Dach,

Fig. 6 einen perspektivisch verlängerten Querschnitt durch den Wagen nach Fig. 5 mit einem Abstützmittel für den freien Dachlängsrand,

Fig. 7 einen perspektivisch verlängerten Querschnitt durch den Wagen nach Fig. 5 mit einem andersartigen Abstützmittel für den freien Dachlängsrand,

Fig. 8 eine Stirnansicht eines Silowagens mit einem Dach aus zwei Längsteilen,

Fig. 9 einen Längsschnitt durch den oberen Teil des Wagens nach Fig. 8, im Bereich einer Stirnwand, mit einer Seitenansicht auf eine zur Abstützung der Dachteile verwendete Tragvorrichtung,

Fig. 10 einen Querschnitt durch den Wagen nach Fig. 8, mit Ansicht auf eine Trennwand, und darauf angebrachte Stützen für die Dachteile,

Fig. 11 eine Stütze nach Fig. 10, von der Seite gesehen,

Fig. 12 einen Querschnitt durch den Dachfirst des Wagens nach Fig. 8 im vergrösserten Masstab,

Fig. 12a einen Querschnitt einer für ein dreiteiliges Dach geeigneten Modifizierung des Dachfirstes nach Fig. 12,

Fig. 13 eine Horizontalschicht unterhalb des Dachfirstes, mit Draufsicht auf die Tragvorrichtung für die Dachteile im Bereich der Stirnwände,

Fig. 14-16 eine Variante der Anordnung von Abschlussblechen zwischen Dachteilen und Stirnwandobergurt in vertikalem Längsschnitt, horizontaler Draufsicht und Stirnansicht,

Fig. 17-19 eine andere Ausführungsform der Variante nach Fig. 14-16,

Fig. 20-22 eine weitere Ausführungsform der Dachkonstruktion, gekoppelt mit einer bis zur Dachhöhe reichenden Kastenstirnwand in Stirnansicht, Draufsicht bzw. Längsschnitt, und

Fig. 23-24 eine weitere Ausführungsform der Dachkonstruktion in Draufsicht und Querschnitt.

Bei den nachstehend beschriebenen Ausführungsformen der Erfindung weist der eigentliche Wagenkasten 1, z.B. eines Silowagens für Schüttgüter, zwei Längswände 2, 3 und zwei Stirnwände 4, 5 auf, welche unter sich sowie am nur in einzelnen Figuren eingezeichneten Kastenboden 11 zu einem selbsttragenden, verwindungsweichen Körper fest verbunden sind.

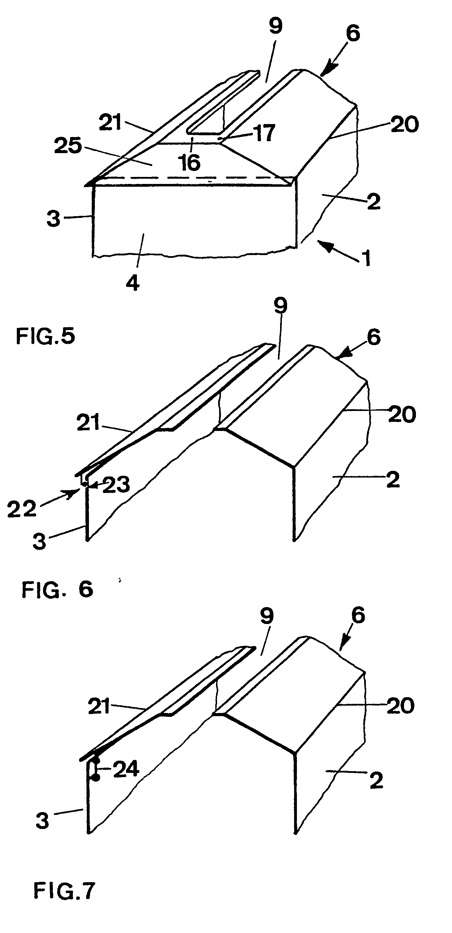

In der Ausführungsform nach den Fig. 4-7 ist das Dach 6 einstückig und an seinem einen Längsrand 20 an der Oberkante bzw. am Obergurt der einen Kastenlängswand 2 befestigt. Mit seinem anderen Längsrand 21 stützt es sich verschiebbar auf den oberen Teil der anderen Kastenlängswand 3 ab. Diese Abstützung kann, wie in Fig. 6 angedeutet, über Rollen 22 erfolgen, welche in einer an der Längswand 3 angebrachten, im Querschnitt U-förmigen Schiene 23 laufen, oder, wie in Fig. 7 gezeigt, mittels Schwenkarmen 24 erfolgen, die einends an der Längswand 3 und andernends am Dach 6 gelagert sind, wobei diese hier gezeigten Schwenkarme in ihrer Länge auf Druck beansprucht sind. An beiden Stirnenden ist das Dach mit einem Schurzblech 25 versehen, welches den Anschluss mit dem oberen Bereich der Kastenstirnwand 4 bildet. Das Dach 6 kann vollflächig ausgebildet sein, oder, wie abgebildet, eine längliche Ladeöffnung 9 aufweisen.

Dank dieser Bauart kann sich beim Fahren der verwindungsweiche Wagenkasten an die durch die Federung nicht absorbierten Auswirkungen von Schienenunebenheiten anpassen und entsprechend verwinden, wodurch die eingangs erwähnte Entgleisungsgefahr nicht mehr besteht. Dabei folgt das Dach 6 den Bewegungen der Längswand 2, an welcher es befestigt ist, und bewegt sich deshalb gegenüber den restlichen Kastenbestandteilen, ohne sich selbst aus dem ursprünglichen rechteckigen Grundriss zu verformen. Infolgedessen behält auch die im Dach vorhandene rechteckige Ladeöffnung 9 ihre Form und wird nicht zu einem Parallelogramm verformt. Dadurch wird das Auftreten von Spannungskonzentrationen in den Schmalseiten 16 sowie von Spannungsspitzen in den Ecken 17 der Längsöffnung 9 vermieden und die Rissbildungsgefahr in diesen Bereichen eliminiert.

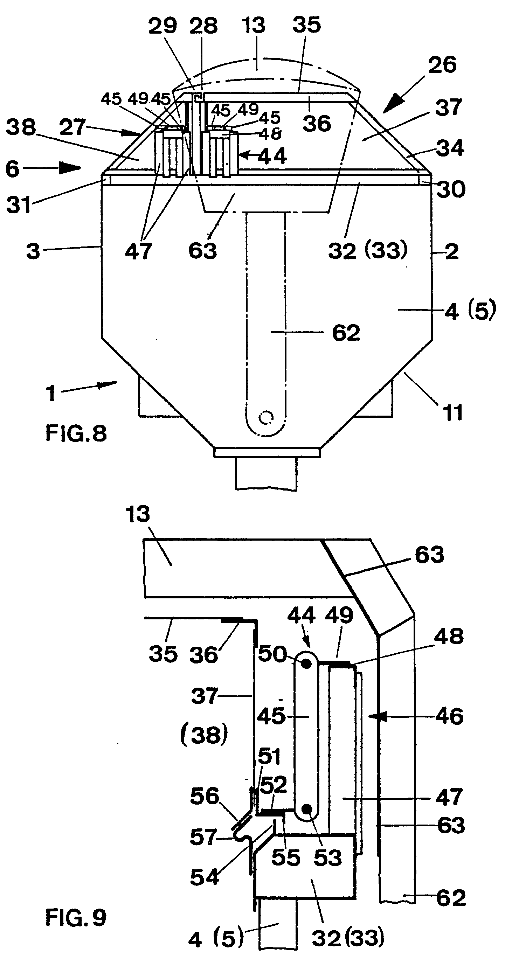

In den Figuren 8 bis 13 ist eine weitere Ausführungsform veranschaulicht, bei der das Dach 6 in zwei Längsteile 26 und 27 unterteilt ist, welche an der einen oder der anderen Kastenlängswand 2, 3 befestigt und an ihren freien Längsrändern 28 oder 29 zueinander längsverschiebbar sind.

In diesem Beispiel ist der zusammenhängende Wagenkasten 1 durch den trichterförmigen Boden 11, die Längswände 2, 3 und die Stirnwände 4, 5 gebildet, welche etwa gleich hoch geführt sind wie die Längswände 2, 3. Zum Kastengerippe gehören unter anderem die oberen Längsgurten 30, 31 der Längswände 2,3, die oberen Gurten 32, 33 der Stirnwände 4, 5 sowie nicht dargestellte vertikale Eck- und Zwischenpfosten und Untergurten. An diesem Gerippe ist die eigentliche Wand- und Bodenverschalung aus Blech oder Flachprofilen befestigt.

Insbesondere besteht das Dach aus einem schmaleren geneigten Längsteil 27, der am Obergurt 31 der Längswand 3 befestigt ist, und einem breiteren, einen geneigten Teil 34 und einen horizontalen Teil 35 umfassenden Längsteil 26, der am Obergurt 30 der anderen Längswand 2 befestigt ist. An ihren Enden sind beide Dachlängsteile 26, 27 je mit Winkelprofilen 36 und daran befestigten Schurzblechen 37, 38 versehen, welche dem Anschluss mit dem oberen Teil der Kastenstirnwände 4, 5 dienen.

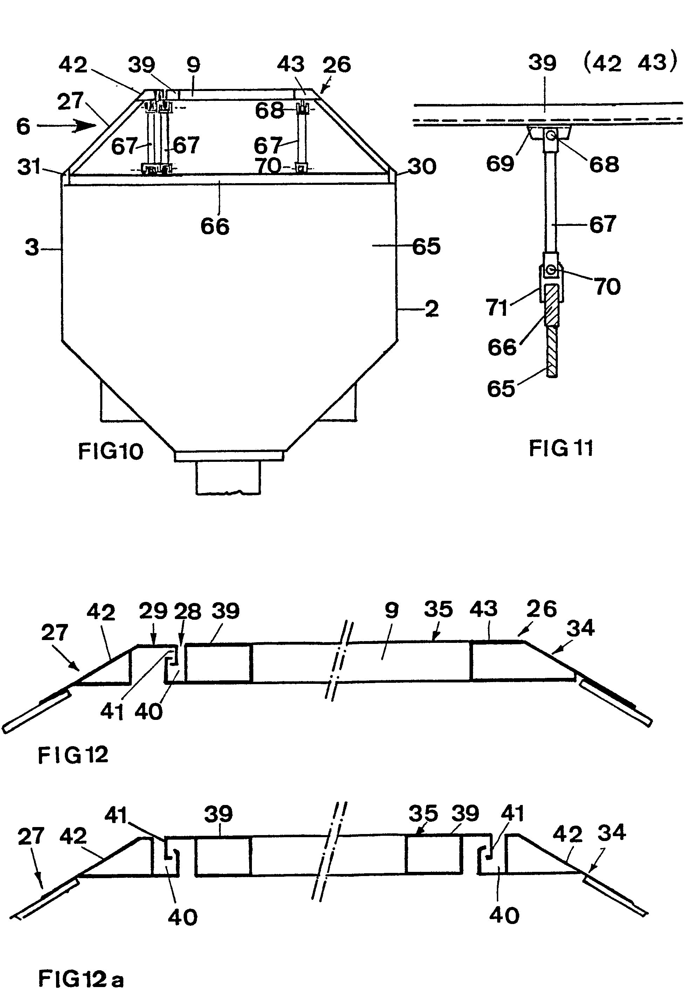

Die freien Längsränder 28, 29 der beiden Dachteile 26, 27 sind hier so ausgebildet, dass sie sich überlappen. Wie insbesondere in Fig. 12, links, gezeigt, kann der eine Dachteil, z.B. der Teil 26, an seinem freien Längsrand mit einem Randprofil 39 versehen sein, das eine nach oben offene Rinne 40 aufweist, in welche ein nach unten gerichteter Flansch 41 des Randprofils 42 des anderen Dachelementes 27 eingreift. Diese beiden Randprofile 39 und 42 weisen unter sich ein ausreichendes Spiel auf, damit die gegenseitigen Bewegungen der beiden Dachelemente ungestört stattfinden können. Beim Dachlängsteil 26 ist der Übergang von geneigten zum horizontalen Teil 34 bzw. 35 durch ein Eckprofil 43 gebildet.

Wenn die beschriebenen Dachlängsteile 26, 27 zusammen ein geschlossenes Dach (ohne Ladeöffnung) bilden, so wirkt die offene Rinne 40 bei Regenwetter als Wasserrinne. Andererseits kann das mittlere horizontale Dachteil 35, insbesondere bei einem Silowagen mit Ladeöffnungen, mit einer länglichen rechteckigen Ladeöffnung 9 (Fig. 12) versehen sein, die mit einem Schwenkdeckel 13 od. dgl. abdeckbar ist. Es ist zweckmässig, die durch die freien Längsränder 28, 29, insbesondere die Randprofile 39 und 42 begrenzte, als Trennfuge wirkende Rinne 40 nahe an die Ladeöffnung 9 zu legen, damit sie durch den Schwenkdeckel 13 od. dgl. abgedeckt werden kann.

Das Randprofil 39 bildet bei nahe an der Ladeöffnung 9 liegender Trennfuge den Rahmen auf einer Längsseite der Öffnung. Es ist jedoch bei abgedeckter Trennfuge auch möglich, dieses Randprofil 39 nicht durchgehend auszubilden, sondern nur in der Nähe der Stirnwände 4, 5 vorzusehen. Die Ladeöffnung 9 wird dann mindestens auf einem Teil ihrer entsprechenden Längsseite durch das Randprofil 42 des anderen geneigten Dachlängsteils 27 begrenzt.

An ihren Enden und im Bereich ihrer freien Längsränder 28, 29 stützen sich die beiden Dachteile 26, 27 je mittels einer gelenkigen Tragvorrichtung 44 auf den Obergurt 32 (33) der Kastenstirnwände 4 (5) ab. Die in den Figuren 8, 9 und 13 dargestellten Tragvorrichtungen 44 haben auf Zug beanspruchbare Schwenkarme 45. Auf dem Stirnwand-Obergurt 32 (33) ist eine Konsole 46 montiert, die im vorliegenden Fall aus zwei Z-Profilen 47 und einem Kopfwinkel 48 besteht. Diese Konsole 46 trägt eine gegen die Dachschurzbleche 37, 38 gerichtete Lasche 49 zur Aufnahme einer Drehachse 50. Andererseits ist am unteren Rand jedes Schurzbleches 37, 38 ein Winkelprofil 51 in kleinem Abstand oberhalb des Obergurtes 32 angeordnet. Auf diesem Winkelprofil ist ebenfalls eine Lasche 52 zur Aufnahme einer weiteren Drehachse 53 befestigt. Beide Drehachsen 50 und 53 sind vorspringend und nehmen ein Paar entsprechend gelochte und als Schwenkarme 45 dienende Flachstäbe auf. Somit ist jedes Dachlängsteil 26, 27 an seinen beiden Enden über die Schwenkarme 45 mittels Konsolen 46 gelenkig aufgehängt, sie können sich bei während des Fahrens auftretenden Torsionen des Wagenkastens 1 in Abstand von den Kastenlängswänden 2, 3 gegenüber den Kastenstirnwänden 4, 5 in Längsrichtung verschieben.

Im weiteren weist der Obergurt 32 (33) zweckmässigerweise einen aufstehenden Flansch 54 als Wassersperre auf, über welchen der vorteilhafterweise mit einer Abtropfleiste 55 versehene horizontale Flansch des Winkelprofils 51 hervorragt. Diese Anordnung verhindert das Eindringen von Regenwasser ins Wageninnere. Auf ihrer Innenseite können die Schurzbleche 37, 38 an ihrem unteren Rand mit einem Weitwinkelprofil 56 versehen sein, wobei der Abstand zwischen diesem und dem Obergurt 32 (33) durch ein verformbares Gummiband 57 od. dgl. überbrückt wird. Hierdurch wird erreicht, dass über diesem Niveau aufgefülltes pulverförmiges Füllgut nicht ausrinnt.

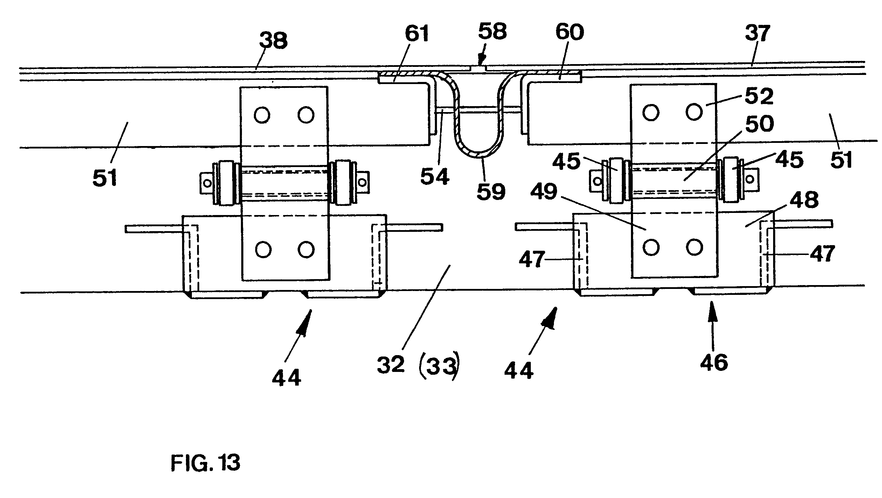

Infolge der erwähnten, durch Verwindungen (Torsionen) des Wagenkastens verursachten Längsverschiebungen der beiden Dachteile 26, 27 zueinander, bleiben die Schurzbleche 37, 38 beider Teile nicht mehr in der gleichen Ebene. Um trotzdem einen dichten Abschluss zwischen diesen Schurzblechen 37, 38 zu gewährleisten, ist deren Fuge 58, wie in Fig. 13 gezeigt, mit einer Gummidichtungsschlaufe 59 abgedeckt, welche mittels als Verstärkungen wirkender Winkelprofile 60, 61 an den betreffenden Schurzblechen 37, 38 befestigt ist.

Als zusätzlicher Wetterschutz kann der Schwenkdeckel stirnseitig mit einem auch an seinem Tragarm 62 befestigten Schirmblech 63 versehen werden.

Der beschriebene Silowagen ist zweckmässigerweise, wie in Fig. 10 und 11 gezeigt, durch Trennwände 65 in Kammern unterteilt, welche Trennwände 65 je an einem die Obergurten 30, 31 der Längswände 2, 3 miteinander verbindenden Versteifungsprofil 66 befestigt sind.

Diese Profile 66 können für eine weitere Abstützung der Dachteile 26, 27 an entsprechenden Zwischenpunkten ihrer Länge mittels gelenkig gelagerter Schwenkarme 67 ausgenützt werden. Hierzu werden für die oberen Drehachsen 68 Lagerstücke 69 an die Randprofile 39 und 42 und an das Eckprofil 43 befestigt und für die unteren Drehachsen 70 Lagerstücke 71 auf dem Profil 66 montiert.

Wenn nötig, kann der Zwischenraum zwischen Versteifungsprofil 66 und Dach durch eine Verlängerung der Trennwand 65 nach oben bzw. durch Einsatz von Blechen oder Kunststoffplatten, etwa ähnlich wie bei den Wagenstirnseiten, abgeschlossen werden.

Nach einer Variante der anhand der Fig. 8 bis 13 beschriebenen Ausführungsform ist es auch möglich, die beiden Teile 34, 35 des breiten Dachteils 26 als Einzelteile auszubilden. Das Dach besteht dann aus drei Teilen, nämlich zwei ähnlichen, an den Seitenwänden befestigten geneigten Dachteilen 27, 34 und einem selbständigen horizontalen Mittelteil 35, der mit der(den) Ladeöffnung(en) 9 versehen werden kann. Mit Bezug auf die Zeichnung bedeutet dies, dass die rechte Hälfte der Figuren 8, 10 und 12 wie das Spiegelbild der linken Hälfte aussieht, wobei aber wegen der einfacheren Montage des Mittelteils 35 die Ränderprofile 42 eine Rinne 40 und die Ränderprofile 39 einen nach unten gerichteten Flansch 41 aufweisen (Fig. 12a). Der selbständige mittlere Teil 35 kann ebenfalls an Tragvorrichtungen 44 aufgehängt werden. Nötigenfalls können mit zusätzlichen Arretierungsmitteln die Längsbewegungen des mittleren Teils 35 gegenüber den seitlichen Dachteilen 27 und 34 begrenzt werden.

Eine Variante gemäss Fig. 12a bietet den Vorteil, dass zwischen den geneigten Seitenteilen 27 und 34 kein Unterschied besteht, was Konstruktion und Herstellung vereinfacht.

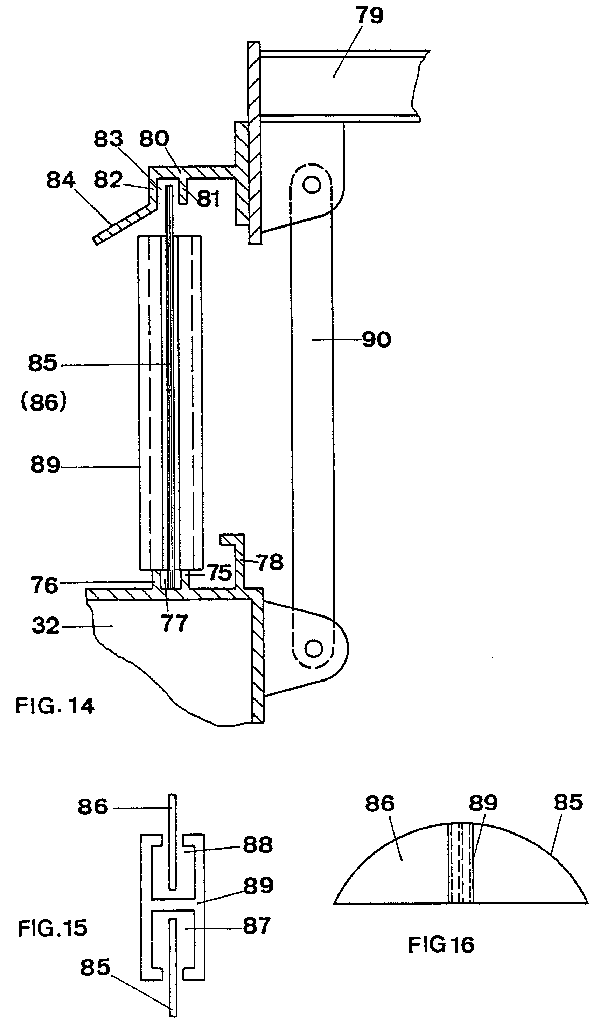

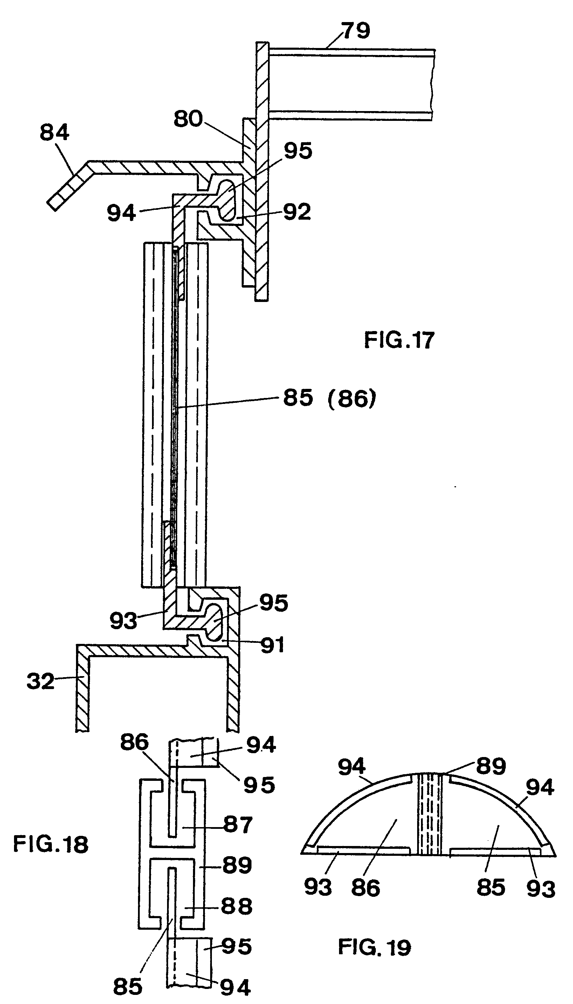

Bei Wagen, deren Kastenstirnwände etwa so hoch geführt sind wie die Kastenlängswände, können die zwischen Stirnwand und Dach angeordneten Abschlussbleche auch nach einem anderen Prinzip montiert werden als anhand der Fig. 8, 9 und 13 erläutert. Dieses andersartige Prinzip soll nun in zwei Ausführungsformen anhand der Fig. 14-16 bzw. 17-19 erläutert werden. In beiden Fällen handelt es sich um ein Dach aus zwei Längsteilen, die in der Mitte der Dachbreite verschiebbar zueinander zusammengefügt sind, wie sich dies aus den Stirnansichten der Fig. 16 bzw. 19 ergibt.

In der Ausführungsform nach Fig. 14 weist der Stirnwand-Obergurt 32 eine durch zwei Rippen 75, 76 gebildete, nach oben offene Rinne 77 und dahinter einen als Wassersperre wirkenden Flansch 78 auf. An den Schmalseiten der Dachlängsteile 79 ist je ein Profil 80 befestigt, das eine durch zwei Rippen 81 und 82 gebildete, nach unten offene Rinne 83 aufweist, wobei die äussere Rippe 82 als schräge Abschirmung 84 verlängert werden kann. Die Rinnen 77 und 83 dienen zur lockeren Halterung des unteren bzw. oberen Randes der Abschlussbleche 85, 86. Im weiteren sind die vertikalen Ränder der beiden Bleche 85, 86 in den hinterschnittenen Rinnen 87, 88 eines losen, vertikal angeordneten H-Profils 89 locker eingefasst.

In Abstand von den Kastenlängswänden sind die Dachlängsteile über gelagerte Schwenkarme 90 auf den Stirnwand-Obergurt 32 abgestützt.

Bei der Ausführungsform nach Fig. 17 weisen sowohl der Stirnwand-Obergurt 32 wie auch das an der Schmalseite der Dachlängsteile 79 befestigte Profil 80 je eine seitlich offene hinterschnittene Rinne 91, 92 auf. Diese Rinnen dienen zur lockeren Aufnahme des am einen Flansch der Winkelprofile 93, 94 angeformten Wulstes 95, wobei die Abschlussbleche 85, 86 durch ihre oberen und unteren Ränder am anderen Flansch der Winkelprofile 93, 94 verschweisst sind. Wiederum sind die vertikalen Ränder der Bleche 85, 86 in den hinterschnittenen Rinnen 87, 88 eines losen, vertikal angeordneten H-Profils 89 locker eingefasst.

Die Dachlängsteile werden zweckmässig, wie in Fig. 14 gezeigt, über Schwenkarme auf den Stirnwand-Obergurt 32 abgestützt.

Was die Funktionsweise solcher Anordnungen anbelangt, so führen in beiden Fällen, nach Fig. 14-16 und 17-18, auftretende Kastenverwindungen zu einer Schräglage des Stirnwand-Obergurtes 32 gegenüber den Profilen 80 des einen und des anderen Dachlängsteiles 79, die sich dabei gegenseitig in Längsrichtung verschieben. Weil dadurch die Halterungsrinnen 77, 83 (Fig. 14) oder 91, 92 (Fig. 17) nicht mehr in der gleichen Ebene liegen, wird jedes Abschlussblech 85, 86 in eine neue Position gebracht, indem ihre Ränder sich in den Rinnen 77, 83 (Fig. 14) oder die Wulste 95 ihrer Randprofile 93, 94 in den Rinnen 91, 92 (Fig. 17) verschieben; falls der vorhandene Spielraum dazu nicht ausreicht, findet ein leichtes Verwinden der beiden Bleche 85, 86 statt. Gleichzeitig dreht sich das lose H-Profil 89 unter dem Druck der vertikalen Blechränder um seine Längsachse.

Wenn nötig, können die Fugen wenigstens teilweise mit flexiblen Gummibändern oder sonstigen Dichtungen abgedichtet werden.

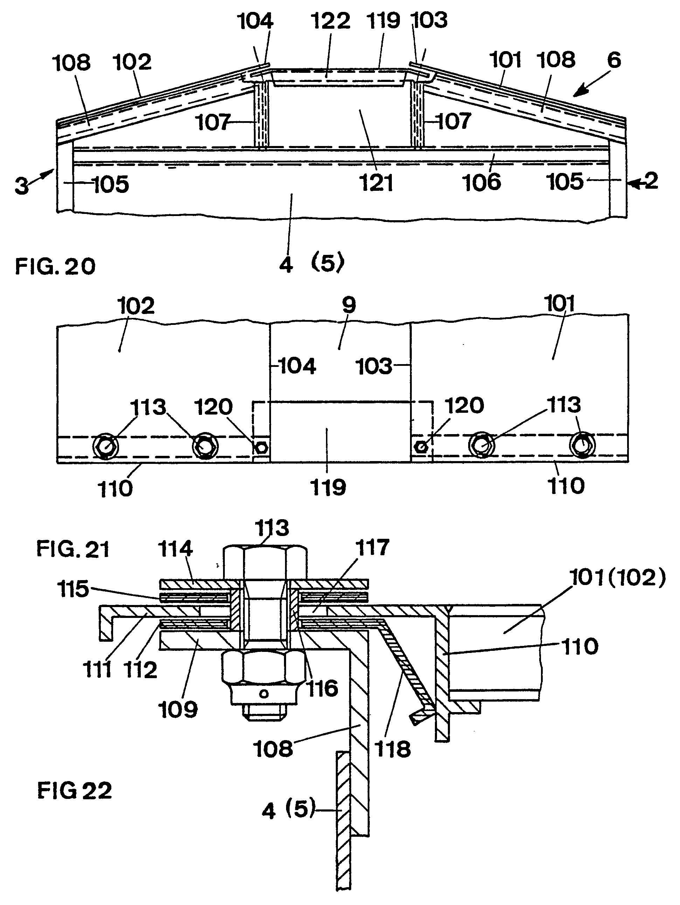

Eine weitere Ausführungsform der Erfindung ist in den Fig. 20-22 veranschaulicht:

In dieser Ausführungsform besteht das Dach 6 des Wagenkastens aus zwei geneigten Teilen 101, 102, die je am oberen Rand einer Längswand 2, 3 befestigt sind, wobei deren freie Längsränder 103, 104 in Abstand voneinander stehen und somit die längliche Ladeöffnung 9 begrenzen.

Bei diesem Ausführungsbeispiel sind — im Gegensatz zu den bisher beschriebenen Ausführungsformen, wo Abschlussbleche den Abstand zwischen Dach und Kastenstirnwänden überbrücken — die Stirnwände 4 (5) des Wagenkastens bis zum Dach 6 geführt.

Wie in Fig. 20 ersichtlich, gehören die Eckpfosten 105, der Obergurt 106, zwei auf diesem Gurt montierte kleine Pfosten 107 sowie parallel zum Dach verlaufende Profile 108 zum Gerippe der Stirnwand 4 (5). Mit diesen Gerippeteilen sind die Wandbleche od. dgl. verschweisst.

Die Profile 108 sind als Winkelprofile gestaltet und bieten durch ihren Flansch 109 eine Auflagefläche für die gleitfähige Abstützung der Schmalseiten der Dachteile 101, 102, wie in den Fig. 21 und 22 gezeigt. Dazu sind die Schmalseiten der Dachteile 101, 102 mit einem Abstützungsprofil 110 versehen, das durch seinen Flansch 111 — unter Zwischenschaltung einer Gleitleiste 112, z.B. aus einem Kunststoff, wie Polytetrafluoräthylen (Teflon) — auf dem Flansch 109 des Winkelprofils 108 aufliegt. Zwischen dem Flansch 109 und der Unterlagsscheibe 114 ist eine die Gleitscheibe 115, den Flansch und die Gleitleiste 112 durchgreifende Abstandshülse 116 angeordnet, so dass beim angezogenen Schraubbolzen 113 der Flansch 111 zwischen Gleitleiste 112 und Gleitscheibe 115 wohl gehalten, jedoch nicht festgeklemmt wird. Weiter weist der Flansch 111 zur Aufnahme des Bolzens 113 ein Loch 117 auf, das bedeutend grösser ist als der Aussendurchmesser der Abstandshülse 11b. Dank dieser Halterungsart können sich die Dachteile 101, 102 bei auftretenden Verwindungen des Kasters gegenüber dem Winkelprofil 108 und somit gegenüber den Stirnwänden 4 (5) des Wagenkastens gleitbar verschieben. Im weiteren weist die Gleitleiste 112 zur besseren Abdichtung vorteilhafterweise einen Seitenflansch 118 auf, der gegen eine Wand des Profils 110 federnd anpresst.

Darüberhinaus ist es zweckmässig, die Ladeöffnung 9 auf ihren beiden Schmalseiten mit je einer Abschlussplatte 119 zu begrenzen. Wie in der Fig. 21 gezeigt, kann eine solche Platte 119 mittels je eines Bolzens 120 an den Dachteilen 101, 102 drehbar befestigt sein. Bei auftretenden Verwindungen des Wagenkastens stellen sich die Abschlussplatten 119 schräg zu den beiden Dachteilen 101-102 und ebenfalls zu den Stirnwänden 4 (5). Wenn eine solche Abschlussplatte, wie in Fig. 20 gezeigt, eine den oberen Rand des mittleren Blechs 121 der Stirnwand überlappende Abkantung 122 aufweist, so ist dafür zu sorgen, dass zwischen dieser Abkantung 122 und dem Blech 121 genügend Abstand vorhanden ist, damit die erwähnten gegenseitigen Bewegungen stattfinden können.

Andererseits ist es möglich, eine abgewinkelte Abschlussplatte 119 am oberen Rand des mittleren Stirnwandbleches 121 oder an den kleinen Pfosten 107 zu befestigen. Dann macht diese Platte 119 die Bewegungen der Stirnwand 4 (5) mit, und es ergibt sich bei Kastenverbindungen eine gegenseitige Verschiebung der Dachseite 101, 102 gegenüber der Platte 119.

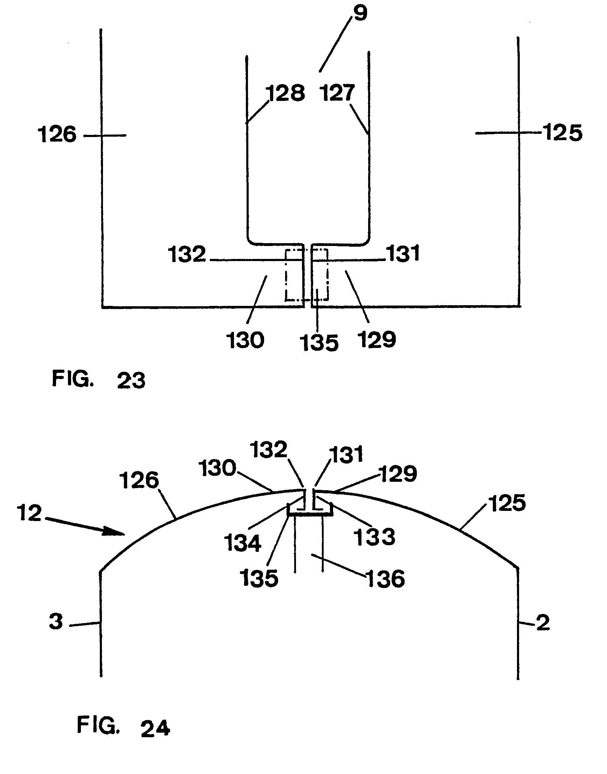

Eine weitere Ausführungsform der Dachteile ist in den Fig. 23 und 24 veranschaulicht. Das Dach besteht aus zwei gewölbten Dachteilen 125, 126, die am oberen Rand einer Seitenwand 2, 3 des Wagenkastens befestigt sind, und deren freie Längsränder 127, 128 in Abstand voneinander liegen und somit die längliche Ladeöffnung 9 begrenzen. Die Dachteile 125, 126 weisen an ihren stirnseitigen Enden je einen gegen die Dachmitte gerichteten Vorsprung 129, 130 auf, durch welchen die längliche Ladeöffnung 9 auf ihren Schmalseiten begrenzt wird.

Dabei können die freien Längsseiten 131, 132 dieser beiden gegenüberliegenden Vorsprünge 129, 130 nahe aneinander liegen und eine, eine Abstützung bildende Abkantung 133, 134 aufweisen, welche sich in die mit einem Belag aus Gleitmaterial, z.B. Teflon, versehene Rinne 135 einer an der Stirnwand befestigten Konsole 138 abstützt. Dies gestattet, dass sich die Dachteile 125, 126 bei Kastenverwindungen zueinander und gegenüber den Stirnwänden verschieben.

Anhand der beschriebenen Beispiele sind verschiedene Ausführungsformen für die Gestaltung der eigentlichen in Längsrichtung verschiebbaren Bedachung, für den Anschluss mit den Stirn- und Seitenwänden, wie auch für die Abstützmittel, erläutert worden. Es versteht sich, dass die Varianten dieser einzelnen Positionen nicht unbedingt so miteinander zu kombinieren sind, wie in den einzelnen Beispielen dargestellt, sondern dass nach Zweckmässigkeit auch andere Kombinationsarten möglich sind.

Was die mit der erfindungsgemässen Konstruktion eines gedeckten Güterwagens, insbesondere Silowagens, bei Verwindungen zu erwartenden Deformationen anbelangt, so kann gesagt werden, dass der ebene Boden eines solchen Wagens bzw. der fiktive Referenzboden eines solchen Silowagens ein Verwinden erfahren kann, bei dem die eine Ecke sich um einen Betrag z bis zu einigen Zentimetern von der durch die drei anderen Ecken bestimmten Ebene entfernt.

Dies entspricht auf Dachhöhe einer Längsverschiebung der Dachlängsteile zueinander um das etwa 0,1- bis 0,4fache des Betrags z, d.h. bis zu etwa 1 cm oder leicht darüber. In der Breite des Daches bleibt die Deformation in einer wesentlich kleineren Grössenordnung. Dächer der beschriebenen Konstruktionsarten sind ohne weiteres in der Lage, die daraus resultierenden Verschiebungen aufzunehmen.

Weiter ist selbstverständlich, dass das Verwinden des Bodens um den Betrag z, also in vertikaler Richtung, sich in vollem Umfang auf Dachhöhe überträgt. Weil die Bedachung zur Festigkeit des selbsttragenden Wagenkastens nichts beizutragen hat, sondern lediglich eine Abdeckungsfunktion erfüllt, kann sie im Leichtbau angefertigt werden. Deshalb können sich die einzelnen verschiebbaren Dachteile selbst (bzw. ein einstückiges, verschiebbares Dach), anpassen und eine Bodenverwindung ohne weiteres übernehmen. Das erfindungsgemässe Konzept bringt also auch in bezug auf die auftretenden Höhenabweichungen eine geeignete Lösung.

Der erfindungsgemässe Güterwagen, insbesondere Silowagen, kann aus Aluminiumlegierungen oder aus Stahl hergestellt werden.

## Patentansprüche

1. Gedeckter Güterwagen, insbesondere Silowagen, dadurch gekennzeichnet, dass der durch zusammenhängende Längswände (2, 3), Stirnwände (4, 5) und Boden (11) gebildete Wagenkasten (1) als selbsttragender verwindungsweicher Körper gestaltet, und das Dach (6, 12) mindestens einen mit einer Längswand (2, 3) fest verbundenen Längsteil aufweist, welche gegenüber den Stirnwänden (4, 5) und der andern Längswand (3, 2) eine die Torsionen auffangende Bewegungsfreiheit in der Wagenlängsrichtung besitzt.

2. Güterwagen nach Anspruch 1, dadurch gekennzeichnet, dass das Dach (6, 12) einteilig ausgebildet, mit einem Längsrand (20) an der Längswand (2) befestigt ist und sich mit seinem freien Längsrand (21) auf der zweiten Längswand des Wagenkastens in Längsrichtung verschiebbar abstützt.

3. Güterwagen nach Anspruch 1, dadurch gekennzeichnet, dass das Dach (6, 12) zwei mit je einer Längswand (2, 3) fest verbundene, zueinander in Längsrichtung verschiebbare Längsteile (26, 27; 101, 102; 125, 126) aufweist, welche sich in Abstand von wenigstens einer Längswand (2, 3) mittelbar oder unmittelbar auf Bestandteile des Wagenkastens (1), vorzugsweise auf die Kastenstirnwände (4, 5), in Längsrichtung verschiebbar abstützen.

4. Güterwagen nach Anspruch 3, dadurch gekennzeichnet, dass zwischen den an den Längswänden (2, 3) befestigten Dachlängsteilen (26, 27) mindestens ein gegenüber beiden in Längsrichtung verschiebbarer Dachlängsteil (35) angeordnet ist.

5. Güterwagen nach Anspruch 3 oder 4, dadurch gekennzeichnet, dass die gegeneinander verschiebbaren Längsränder der Dachteile sich überlappen, vorzugsweise durch eine in eine Wasserrinne (40) mit Spiel greifende Abkantung (41).

6. Güterwagen nach einem der Ansprüche 1 bis 5, dadurch gekennzeichnet, dass in wenigstens einem der Dachlängsteile (26, 27; 101, 102; 125, 126), vorzugsweise im Bereich des Dachfirstes, eine oder mehrere Ladeöffnung/en (9, 18) ausgebildet ist/sind.

7. Güterwagen nach einem der Ansprüche 1 bis 6, dadurch gekennzeichnet, dass die Dachlängsteile (26, 27; 101, 102; 125, 126) in Abstand von den Längswänden (2, 3), an welchen sie befestigt sind, mittels gelenkig gelagerter Schwenkarme (24, 45, 67, 90), Rollen (22) und/oder Gleitschichten (112, 135) getragen sind, die sich auf Wagenkastenbestandteile, vorzugsweise Obergurten von Stirnwänden und/oder von Trennwänden, abstützen.

8. Güterwagen nach einem der Ansprüche 1 bis 7, dadurch gekennzeichnet, dass die Stirnwände (4, 5) gleich hoch wie die Längswände (2, 3) ausgebildet sind und der Abstand bis zum Dach (6, 12) durch steife Schurzbleche (25, 37, 38) abgeschlossen ist, die an den Längsteilen (26, 27; 34, 35) des Dachs befestigt sind und bei auftretenden Kastenverwindungen mit diesen Längsteilen gegenüber den Stirnwänden (4, 5) in Längsrichtung verschiebbar sind.

9. Güterwagen nach einem der Ansprüche 1 bis 7, dadurch gekennzeichnet, dass die Stirnwände (4, 5) gleich hoch wie die Längswände (2, 3) ausgebildet sind und der Abstand bis zum Dach durch verwindbare Abschlussbleche (85, 86) abgeschlossen ist, deren untere und obere Ränder unmittelbar oder über Randprofile (93, 94) in Rinnen (77, 91; 83, 92) der Stirnwände (4, 5) und der Dachlängsteile (79) eingefasst sind.

10. Güterwagen nach einem der Ansprüche 1 bis 7, dadurch gekennzeichnet, dass die Stirnwände (4, 5) bis zur Dachhöhe geführt und oben mit einem Profil (108) versehen sind, welches eine in Längsrichtung verschiebbare Abstützung der Längsteile (101, 102) des Dachs ermöglicht.

## Claims

1. Covered wagon, especially silo wagon, characterised in that the wagon body (1), formed by continuously joined longitudinal walls (3, 3), end walls (4, 5) and bottom (11), is designed as a self-supporting torsionally unresistant geometric solid, and the roof (6, 12) has at least one longitudinal part which is firmly connected to the longitudinal wall (2, 3) and possesses freedom of movement in the longitudinal direction of the wagon with respect to the end walls (4, 5) and the other longitudinal wall (3, 2), absorbing the torsions.

2. Wagon according to Claim 1, characterised in that the roof (6, 12) is designed as one part, is fixed by a longitudinal edge (20) on the longitudinal wall (2) and is supported displaceably in longitudinal direction by its free longitudinal edge (21) on the second longitudinal wall of the wagon body.

3. Wagon according to Claim 1, characterised in that the roof (6, 12) has two longitudinal parts (26, 27; 101, 102; 125, 126) which are displaceable in a longitudinal direction with respect to each other and are firmly connected each to a longitudinal wall (2, 3) and are supported displaceably in logitudinal direction at a distance from at least one longitudinal wall (2, 3) indirectly or directly on component parts of the wagon body (1), preferably on the end walls (4, 5) of the wagon.

4. Wagon according to Claim 3, characterised in that between the longitudinal parts (26, 27) of the roof fixed on the longitudinal walls (2, 3) there is arranged at least one longitudinal part (35) of the roof which is displaceable in a longitudinal direction with respect to both.

5. Wagon according to Claim 3 or 4, characterised in that the mutually displaceable longitudinal edges of the roof parts overlap, preferably by a turned-over edge (41) engaging with play in a gutter (40).

6. Wagon according to one of Claims 1 to 5, characterised in that in at least one of the longitudinal parts (26, 27; 101, 102; 125, 126) of the roof there is/are formed, preferably in the region of the roof ridge, one or more loading opening(s) (9, 18).

7. Wagon according to one of Claims 1 to 6, characterised in that the longitudinal parts (26, 27; 101, 102; 125, 126) of the roof are borne at a distance from the longitudinal walls (2, 3), to which they are fixed, by means of jointedly mounted swivel arms (24, 45, 67, 90), rollers (22) and/or sliding layers (112, 135), which are supported on component parts of the wagon body, preferably upper booms of end walls and/or of dividing walls.

8. Wagon according to one of Claims 1 to 7, characterised in that the end walls (4, 5) are designed at the same height as the longitudinal walls (2, 3) and the distance to the roof (6, 12) is closed off by rigid apron plates (25, 37, 38), which are fixed on the longitudinal parts (26, 27; 34, 35) of the roof and are displaceable with these longitudinal parts in longitudinal direction with respect to the end walls (4, 5) whenever body torsions occur.

9. Wagon according to one of Claims 1 to 7, characterised in that the end walls (4, 5) are designed at the same height as the longitudinal walls (2, 3) and the distance to the roof is closed off by torsionally compliant end plates (85, 86), the lower and upper edges of which are held directly or via edge sections (93, 84) in channels (77, 91; 83, 92) of the end walls (4, 5) and of the longitudinal parts (79) of the roof.

10. Wagon according to one of Claims 1 to 7, characterised in that the end walls (4, 5) are made up to roof height and are provided at the top with a section (108) which makes possible a longitudinally displaceable supporting of the longitudinal parts (101, 102) of the roof.

## Revendications

1. Wagon de marchandises couvert, en particulier wagon-silo, caractérisé en ce que la caisse (1) du wagon, formée par les parois longitudinales, autostables (2, 3), les parois frontales (4, 5) et le plancher (11) est conçue sous forme de corps autoportant, présentant une faible résistance au gauchissement; et en ce que le toit (6, 12) présente au moins une partie longitudinale qui est solidarisée avec une paroi longitudinale (2, 3) et qui possède, à l'égard des parois frontales (4, 5) et de l'autre paroi longitudinale (3, 2), dans la direction longitudinale du wagon, une liberté de mouvement qui lui permet de reprendre les torsions.

2. Wagon de marchandises selon la revendication 1, caractérisé en ce que le toit (6, 12) est conçu d'une seule pièce, est fixé, par un bord longitudinal (20), à la paroi longitudinale (2), et, par son bord longitudinal libre (21), s'appuie sur la seconde paroi longitudinale de la caisse du wagon, avec possibilité de coulisser en direction longitudinale.

3. Wagon de marchandises, selon la revendication 1, caractérisé en ce que le toit (6, 12) présente deux parties longitudinales (26, 27; 101, 102; 125, 126) qui sont respectivement solidarisées avec une paroi longitudinale (2, 3), qui peuvent coulisser l'une par rapport à l'autre en direction longitudinale, et qui, à un certaine distance d'au moins une paroi longitudinale (2, 3), s'appuient indirectement ou directement, avec possibilité de coulisser dans la direction longitudinale, sur des constituants de la caisse (1) du wagon, de préférence sur les parois frontales (4, 5) de la caisse.

4. Wagon de marchandises selon la revendication 3, caractérisé en ce qu'entre les parties longitudinales (26, 27) du toit, situées aux parois longitudinales (2, 3) est disposée au moins une partie longitudinale (35) du toit qui peut coulisser en direction longitudinale par rapport à ces deux parties.

5. Wagon de marchandises selon la revendication 3 ou 4, caractérisé en ce que les bords longitudinaux, qui peuvent coulisser l'un par rapport à l'autre, des parties du toit se recouvrent, de préférence par un bord replié (41) qui vient se loger, avec jeu, dans une gouttière (40).

6. Wagom de marchandises selon l'une des revendications 1 à 5, caractérisé en ce que dans au moins l'une des parties longitudinales (26, 27; 101, 102; 125, 126) du toit, de préférence dans la zone du faîtage du toit, est disposée, ou sont disposées, une ou plusieurs, ouverture, ou ouvertures, de chargement (9, 18).

7. Wagon de marchandises selon l'une des revendications 1 à 6, caractérisé en ce que les parties longitudinales (26, 27; 101, 102; 125, 126) du toit sont portées, à une certaine distance des parois longitudinales (2, 3) auxquelles elles sont fixées, au moyen de bras pivotants (24, 45, 67, 90) articulés dans leur portée, de rouleaux (22) et/ou de couches de glissement qui s'appuient sur les constituants de la caisse du wagon, de préférence sur les écharpes supérieures des parois frontales et/ou des cloisons.

8. Wagon de marchandises selon l'une des revendications 1 à 7, caractérisé en ce que les parois frontales (4, 5) sont conçues de la même hauteur que les parois longitudinales (2, 3) et en ce que la distance allant jusqu'au toit (6, 12) est obturée par des tôles de pignon rigides (25, 37, 38) qui sont fixées aux parties longitudinales (26, 27; 34, 35) du toit et qui, en présence de gauchissements de la caisse, peuvent coulisser en direction longitudinale avec ces parties longitudinales par rapport aux parois frontales (4, 5).

9. Wagon de marchandises selon l'une des revendications 1 à 7, caractérisé en ce que les parois frontales (4, 5) sont conçues de la même hauteur que les parois longitudinales (2, 3) et en ce que la distance allant jusqu'au toit est obturée par des tôles d'obturation (85, 86) qui peuvent gauchir et dont les bords inférieurs et supérieurs sont enchâssés, directement ou par l'intermédiaire de profilés de bordure (93, 94), dans des rigoles (77, 91; 83, 92) des parois frontales (4, 5) et des parties longitudinales (79) du toit.

10. Wagon de marchandises selon l'une des revendications 1 à 7, caractérisé en ce que les parois frontales (4, 5) vont jusqu'à la hauteur du toit et sont munies, en haut, d'un profilé (108) qui permet un appui, coulissant dans la direction longitudinale, des parties longitudinales (101, 102) du toit.

FIG.1

FIG.2

*STAND DER TECHNIK*

FIG. 3

FIG.4

FIG.5

FIG. 6

FIG.7

FIG.8

FIG. 9

FIG10

FIG 11

FIG 12

FIG 12 a

FIG. 13

EP 0 206 886 B1

FIG. 14

FIG.15

FIG 16

79

80

84

95

94

92

FIG.17

85 (86)

95

93

91

32

FIG.18

86

94

95

87

89

88

85

95

94

94

89

94

93 86

85 93

FIG. 19

104 122 119 103

108 102 101 108 6

107 107

3 105 121 106 105 2

**FIG. 20**

4 (5)

102 9 101

104 103

113 120 120 113

110 119 110

**FIG. 21**

113

114 117

115 101(102)

110

111 112 116

109 108 118

4 (5)

**FIG 22**

9

128  127

126                                                     125

132                                             131

130      135    129

FIG.  23

132   131

130            129

126                                         125

12

134            133

135        136

3                                               2

FIG.  24